# EUROPEAN PATENT SPECIFICATION

(11) **EP 3 644 704 B1**
(45) Date of publication and mention of the grant of the patent: **30.09.2020**
(21) Application number: 18749889.4
(22) Date of filing: 19.06.2018
(51) Int. Cl.: A01B 63/10, A01B 63/111

(54) **MANIFOLD MODULES. SYSTEM AND AGRICULTURAL IMPLEMENT COMPRISING SUCH MANIFOLD MODULES**
VERTEILERMODULE. SYSTEM UND LANDWIRTSCHAFTLICHES GERÄT MIT SOLCHEN VERTEILERMODULEN
MODULES DE COLLECTEUR LA PRÉSENTE INVENTION CONCERNE UN SYSTÈME ET UN OUTIL AGRICOLE COMPRENANT DES MODULES DE COLLECTEUR.

(30) Priority: 26.06.2017 SE 1750820
(43) Date of publication of application: 06.05.2020
(73) Proprietor: Väderstad Holding AB, 590 21 Väderstad (SE)
(72) Inventor: SÖDERBERG, Johan, 583 36 Linköping (SE)
(74) Representative: AWA Sweden AB
(86) International application number: PCT/SE2018/050649
(87) International publication number: WO 2019/004900

(56) References cited:
- EP-A1- 2 377 384
- US-A- 6 000 315
- US-A1- 2004 016 556
- US-A1- 2015 191 897
- US-B1- 6 216 795
- US-B2- 8 857 172

## Description

### Technical Field

This document relates to a method and a device for controlling an actuator in an agricultural implement.

This document specifically relates to one way of providing manifolds for controlling hydraulic or pneumatic functions of an agricultural implement.

### Background

Agricultural implements with ground-engaging implements may be in the form of e.g. cultivators, harrows, ploughs, seed drills and/or precision seed drills. In such agricultural implements, one or more functions can be driven using hydraulics. For example, such functions can be setting the working depth or height of the implement or such parts of the implement, deployment and retraction of the implement frame sections, deployment and retraction of marker arms, driving a fan and driving a metering rotor.

Feeding of hydraulic power to the agricultural implement usually happens from a tractor vehicle, such as a tractor.

Traditionally, each function is fed via a pair of feed channels comprising one pressurized feed channel and one return channel. There is also so-called double-acting feeding, where a pair of feed channels can switch functions in relation to each other so that one channel, which in a first state is a feed channel, is a return channel in a second state, and vice versa. Most tractor vehicles have 3 to 6 such pairs of feed channels available. Each pair of feed channels can be controlled via a lever from the control cab of the tractor vehicle.

As agricultural implements are increasing in size and complexity it is desirable to provide a larger number of functions, which means that a plurality of pairs of feed channels has to be provided. In turn, this means that a large amount of hydraulic hoses must be routed in or on the agricultural implement, and that a large number of couplings has to be connected when the agricultural implement is connected to the tractor vehicle.

It is known to feed hydraulic power to a so-called hydraulic block from which two or more different functions are supplied through numerically controlled valves, as for example known from EP2377384A.

In addition, it is however desirable for agricultural implements that the safety of the operator is high with a low risk of personal injury, and that the operational reliability is high in order to avoid downtime and to facilitate addressing any problems that may arise in connection with the operation of the agricultural implement.

It is desirable to provide an agricultural implement with the same or an increased number of hydraulically driven functions, but that are simpler and more cost-effective to construct, install, maintain and handle, while maintaining operational safety and the safety of the operator.

### Summary

One object of the invention is therefore to provide an improved system for feeding hydraulic or pneumatic actuators in an agricultural implement.

The invention is defined by the accompanying independent claims. Embodiments are set forth in the accompanying dependent claims, in the description that follows and in the accompanying drawings.

According to a first aspect, there is provided an agricultural implement as claimed in claim 1.

The agricultural implement comprises a system comprising a manifold base module as described above is provided, and a first manifold sub-module for overriding, as described above, the first manifold sub-module being connected to the manifold base module by the second coupling interface being connected to the fourth coupling interface.

Such a system can form a manifold module, which has a first function provided by the base module, for example a position-control function, which can be overridden by the feed channel and return channel being changed around.

The system comprises a a controllable manifold base module for hydraulic or pneumatic fluid is provided, comprising first and second feed ports, a first main channel, which is connected to the first feed port, a second main channel, which is connected to the second feed port, a first numerically controllable valve arrangement, which is connected to the two main channels, a first control channel, which is controllably connectable to the main channels via the valve arrangement, a second control channel, which is controllably connectable to the main channels via the valve arrangement, a first forwarding port, which is connected to the first main channel, and a second forwarding port, which is connected to the second main channel. The module has at least one bypass channel, which is connected to one of said first and second main channels.

"Forwarding port" means a port which in a substantially unaffected manner leads a flow from the main channels for engagement with, e.g. another manifold base module, connected in parallel to the first manifold base module.

"Bypass channel" means a channel which bypasses the manifold base module valve arrangement, so that the same function that the manifold base module valve arrangement is designed to affect, can be affected by a sub-module instead. A bypass channel is also meant to bypass the manifold base module valve arrangement.

"Numerically controllable valve arrangement" means a valve arrangement that can be set using a control unit, such as a computer. This means that the valve can be controlled or reset using e.g. an electric or pneumatic adjusting signal.

A base module as described above can be used as it is for controlling an agricultural implement. Alternatively, thanks to the bypass channels, it can be connected to one or more sub-modules in order to thereby provide alternative or complementary functionality. By way of the forwarding channels, several base modules can then be assembled to form a manifold set.

The base module can form the basis for a modular manifold system, which, starting from a few base components, can provide a plurality of different functions, thereby simplifying the design of manifold modules.

Furthermore, the extension of a manifold system is facilitated, concerning complementary functionality for both original functions and new functions.

The valve arrangement can be designed, in a first working position, to permit a flow from the first main channel to the first control channel, and to permit a return flow from the second control channel to the second main channel.

The valve arrangement can be designed, in a second working position, to permit a flow from the first main channel to the second control channel, and to permit a return flow from the first control channel to the second main channel.

The valve arrangement can be designed, in a third working position, to prevent a flow from the first main channel to the control channels.

The feed ports can provide a first coupling interface, which is formed on a first surface of the manifold module.

Here, "coupling interface" means an arrangement for connecting manifold modules to each other or to an external unit, such as a feed source or an actuator fed via the manifold module.

Generally, a coupling interface can be arranged for reversible connection, i.e. connection which can be disassembled without destroying the interconnected parts.

For example, the coupling interface may be in the form of an outwardly exposed surface of a manifold module, wherein one or more channels exit from the surface.

Two such interface surfaces of adjacent manifold modules can be interconnected, interface surface to interface surface, possibly with one or more intermediate parts that can form seals and/or spacers. Fixing can be provided using an arbitrary joint, such as a screw joint, acting between the module casings or module bodies. "Module body" means a body enclosing a pressure medium. It will be appreciated that such a module body can be formed in one piece with a casing, or enclosed by a separately formed casing.

Alternatively, two manifold modules can be connected via a tube or a pipe, wherein which the manifold module casings/module bodies can be located at a greater distance (at least a distance greater than the greatest dimension of the respective manifold module) from each other.

As an additional alternative, the two manifold modules, e.g. two manifold base modules or one manifold base module and one manifold sub-module, are integrated into one common casing or one common module body, wherein the coupling interface is then inside the casing. In another alternative, the coupling interface can be permanent, i.e. the manifold modules can be fixedly interconnected, and then preferably accommodated in a common casing.

Control ports connected to the control channels can provide a second coupling interface, which is separate from the first coupling interface, preferably by being formed on a second surface of the manifold module.

The second surface can be perpendicular to the first surface.

Bypass ports connected to the bypass channels can provide part of the second coupling interface.

The forwarding ports can provide a third coupling interface, which is separate from the first and second coupling interfaces, preferably by being formed on a third surface of the manifold module.

The third surface can be parallel to the first surface. Preferably, the forwarding ports are located in mirror image to the feed ports, so that the feed ports of one first base module can be connected to the forwarding ports of a second base module when the base modules are located next to and adjacent to each other, with control ports and bypass ports directed in the same direction.

The manifold base module can comprise a first bypass channel, which is connected to the first main channel, and a second bypass channel, which is connected to the second main channel.

The system further comprises a controllable manifold sub-module for hydraulic or pneumatic fluid is provided, comprising first and second throughgoing controlchannels, at least one bypass channel, and a second numerically controllable valve arrangement, which is arranged to control a flow between one of the control channels and the bypass channel.

The manifold sub-module can be designed to always be connected to a manifold base module or to another manifold sub-module.

The bypass channel of the manifold sub-module can be designed to be connected to a bypass channel of the manifold base module. Alternatively, the bypass channel of the manifold sub-module can be designed to be fully through going, so that it enables bypassing of the manifold sub-module, for example, in favour of an additional manifold sub-module thereof which is connected between the manifold sub-module in question and the function to be controlled.

The manifold sub-module can comprise a first bypass channel and a second bypass channel.

Such a manifold sub-module can be connected to a base module according to the description above to provide complementary functionality or alternative functionality.

In the manifold sub-module, the valve arrangement can be configured, in a first feeding direction of the bypass channels, to prevent feeding between the bypass channels and the control channels, and, in a second feeding direction of the bypass channels, to permit feeding between the bypass channels and the control channels.

Alternatively, the valve arrangement can be configured to permit feeding to one of the control channels irrespective of the feeding direction of the bypass channels.

Such a manifold sub-module can be used for simple bypassing of a function of a base module, or another sub-module, by changing the feed channels and return channels around.

In the manifold sub-module, the second valve arrangement can be adjustable between two states, wherein the second valve arrangement, in a first state, prevents a flow from the first bypass channel to the first control channel, prevents a flow from the second control channel to the second bypass channel and permits a flow from the second bypass channel to the second control channel, and wherein the second valve arrangement, in a second state, permits a flow from the second bypass channel to the second control channel and permits a flow from the first control channel to the first bypass channel.

In the manifold sub-module, the second valve arrangement can comprise a control valve, which in a first state, permits a flow from the second bypass channel to the second control channel and which, in a second state, prevents a flow from the second bypass channel to the second control channel, a check valve, which only permits a flow from the second bypass channel to the second control channel, a pilot valve, which only permits a flow from the first control channel to the first bypass channel when pressure is in the forward direction of the check valve.

Such a manifold sub-module can be used to bypass a function of a base module, or of another sub-module, to provide pressure control of the function associated with the module.

In the manifold sub-module, ports connected to the control channels and ports connected to the bypass channels can form a fourth coupling interface, which, preferably, is formed on a first surface of the manifold sub-module.

In the manifold sub-module, the valve arrangement can be changed between two states, wherein the valve arrangement, in a first state, prevents a flow from one of the control channels to the bypass channel, and wherein the valve arrangement, in a second state, permits a flow from said control channel to the bypass channel, wherein the valve arrangement can comprise a pressure control arrangement, configured to maintain a predetermined pressure in one of the control channels.

The manifold sub-module can further comprise a pressure sensor, or a pressure sensor input, arranged to sense a pressure in one of the control channels.

The manifold sub-module can further comprise a pressure accumulator, or a pressure accumulator input, which is connected to one of the control channels.

The manifold sub-module can further comprise a pressure control valve, arranged to maintain the predetermined pressure in the control channel through communication with at least one of the bypass channels.

The manifold sub-module can have a fifth and sixth coupling interface, which are connected to the control channels and to the bypass channels, preferably formed on first or second surfaces of the manifold sub-module respectively, and which are located on opposite sides of the module.

According to a second aspect, an agricultural combination is provided, comprising a tractor vehicle and an agricultural implement as described above, wherein the tractor vehicle has a double-acting hydraulic output comprising the first and second hydraulic ports, wherein, in a first state of feeding, the first hydraulic port forms the feed channel and the second hydraulic port forms the return channel, and, in a second state of feeding, the first hydraulic port forms the return channel and the second hydraulic port forms the feed channel, and wherein said hydraulic ports are connected to respective feed ports.

### Brief description of the drawings

Fig 1 schematically illustrates an agricultural implement with a tractor vehicle.
Fig 2 schematically shows a manifold module according to a first embodiment.
Fig 3 schematically shows a manifold module according to a second embodiment.
Fig 4a schematically shows a manifold module with an override module.
Figs 4b-4c schematically show alternative override modules.
Fig 5 schematically shows a manifold module with a first type of pressure control module.
Fig 6a schematically shows a manifold module with a second type of pressure control module.
Fig 6b schematically shows an additional type of pressure control module.
Fig 7 schematically shows a manifold module with a pressure control module and an override module.
Fig 8 schematically shows a hydraulic system for an agricultural implement, which comprises a plurality of manifold modules and variants with bypass and/or pressure control.
Figs 9a-9b schematically show a base module 31.
Figs 10a-10b schematically show an override module 32.
Figs 11a-11b schematically show a pressure control module 33.

### Detailed description

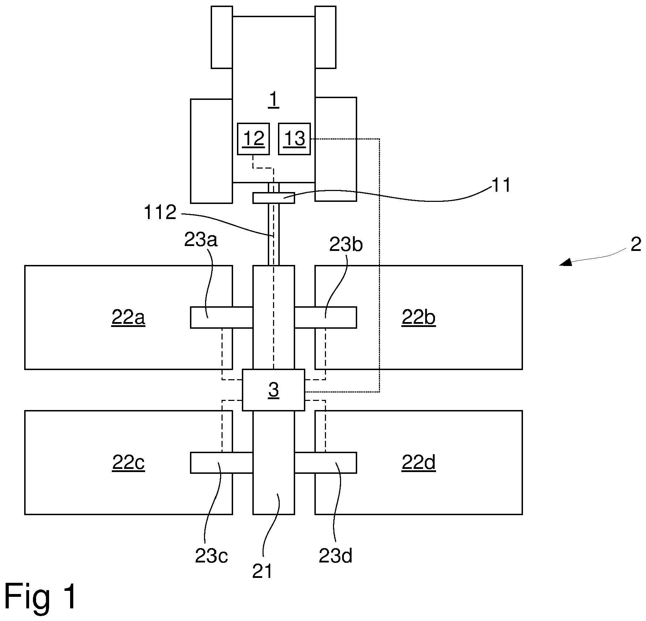

Fig 1 shows an agricultural combination comprising a tractor vehicle 1, such as a tractor, and an agricultural implement 2, such as a harrow, a cultivator, a plough, a seed drill, or a precision seed drill. The agricultural implement has a frame 21 and a plurality of parts 22a, 22b, 22c, 22d that can move relative to the frame, such as frame portions, wheels, tool holders, marker arms, the position of which relative to the frame 21 is adjustable using hydraulic actuators 23a, 23b, 23c, 23d. Alternatively, actuators, such as a fan or feed wheel, can be controlled.

The agricultural implement hydraulic system is fed by hydraulic power from the tractor vehicle 1, via its hydraulic outputs 11, comprising at least one double-acting hydraulic output, i.e. a hydraulic output, the channels of which can switch between being a feed channel and a return channel depending on the operator's selection via a hydraulic control 12 in the tractor vehicle 1.

Feeding from the tractor vehicle 1 leads to a manifold system 3 comprising a plurality of numerically controlled valves which distribute hydraulic power to the various actuators 23a, 23b, 23c, 23d in dependence on a setting which is made via a user interface 13, which can be located in the tractor vehicle, or can be carried by the operator.

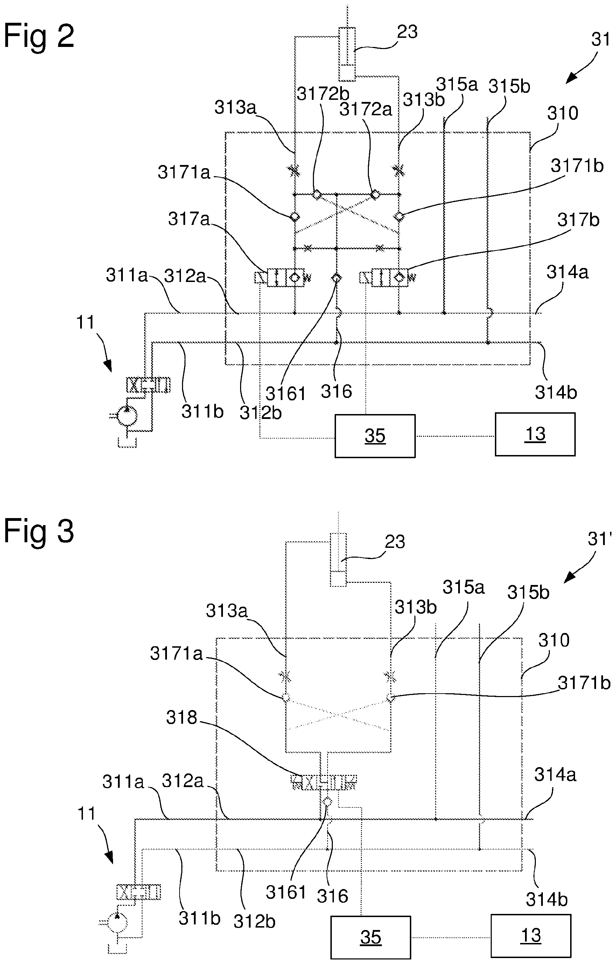

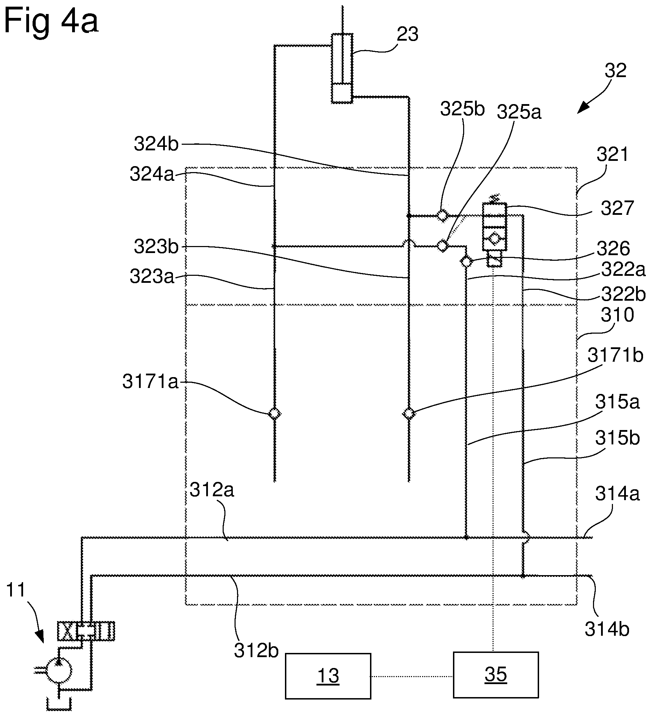

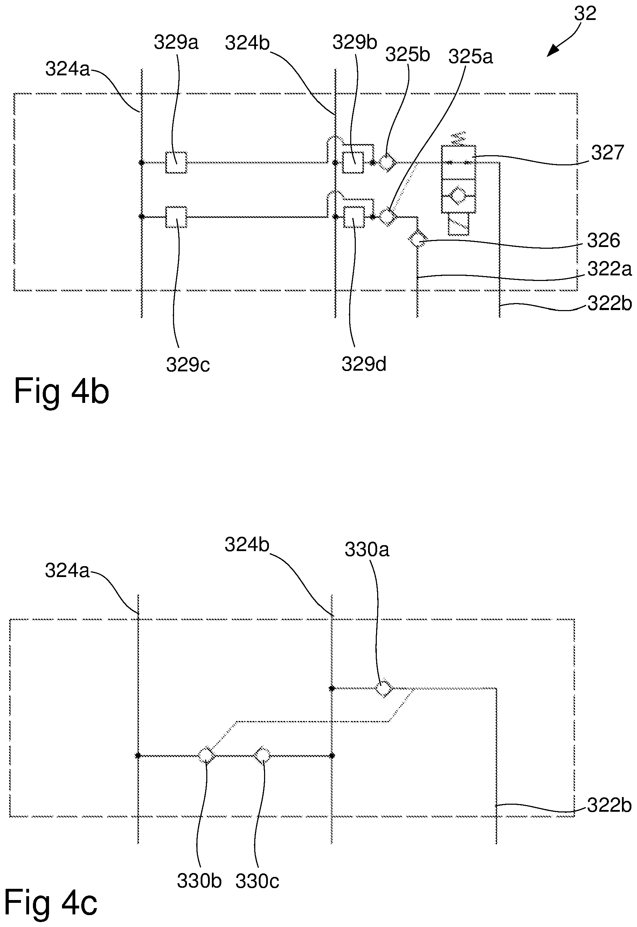

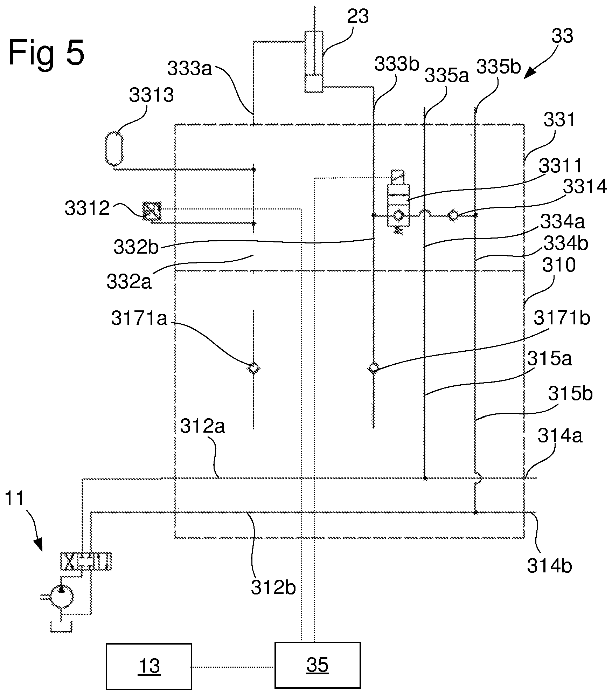

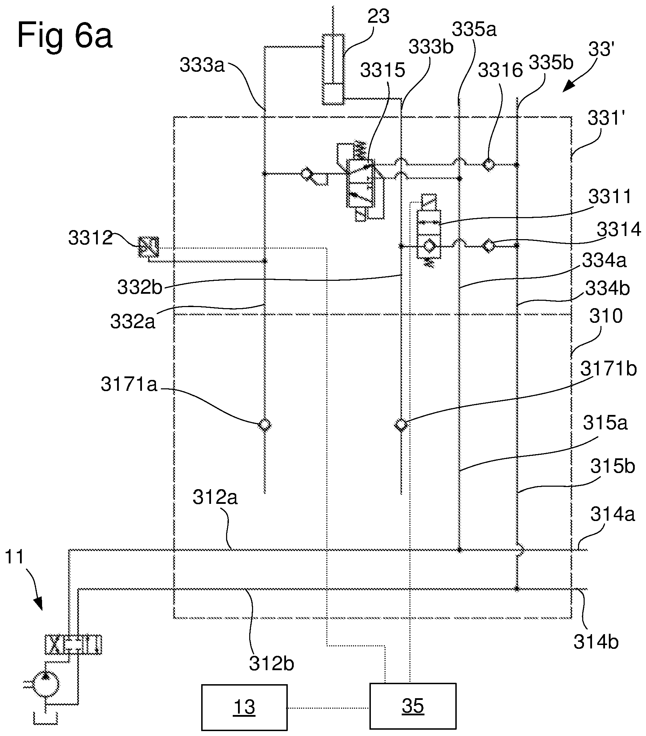

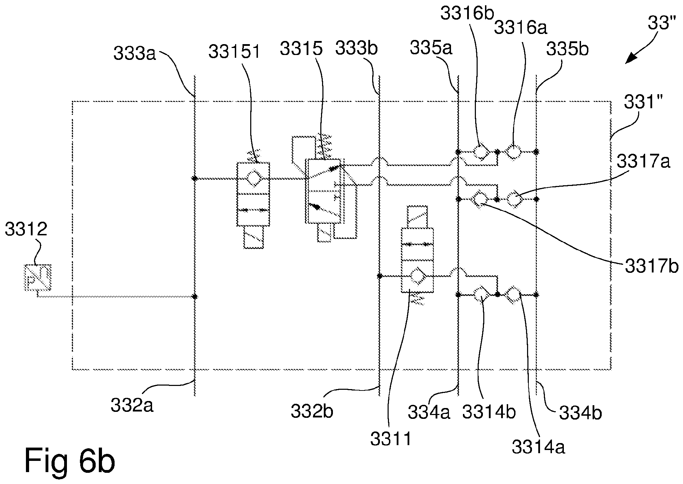

The manifold system 3 shown herein can be built up of a few different modules comprising a base module 31, 31' (Figs 2, 3), an override module (Figs 4a, 4b) and a pressure control module (Figs 5, 6). A plurality of base modules 31, 31' can be interconnected to form a hydraulic forwarding line. Each base module can control a function, alone or together with an override module 32 and/or a pressure control module 33, 33'.

Alternative embodiments of a base module will be described below. A function of the base module is to position-control an implement toward a desirable value, i.e. a desired position, and, when the base module valve arrangement is passive, to prevent the tool from moving from the set position.

With reference to Fig 2, the base module comprises a casing 310, main channels 312a, 312b, outgoing controllable channels 313a, 313b, outgoing channels 314a, 314b for engagement to an adjacent base module and bypass channels 315a, 315b for engagement of an override module or pressure control module. The first main channel 312a is fixedly connected to the first bypass channel 315a and to the first forwarding channel 314a. The second main channel 312b is fixedly connected to the second bypass channel 315b and to the second forwarding channel 314b.

The base module 31 further comprises a numerically controllable valve arrangement, which, as shown in Fig 2, comprises a first valve 317a, which is connected to the first main channel 312a, and a second valve 317b, which is connected to the first main channel 312a.

The valves 317a, 317b are numerically controllable, for example by being activated and/or deactivated by means of an external signal, e.g. an electric signal from a control unit.

The control can be provided directly from a unit 13 in the tractor vehicle, or via a separate control unit 35, which can be arranged on the agricultural implement 2 and have the ability to communicate using the user interface 13, either wired or wirelessly (Wi-Fi, Bluetooth, etc.), and to control the hydraulic valves by providing a suitable signal.

The first valve 317a is operable for retracting the actuator 23 and permits, in an activated state, feeding from the first main channel 312a to the first controllable channel 313a and returning from the second controlled channel 313b to the second main channel 312b via the return channel 316 by opening the check valve 3172a. The check valve 3172a is pilot-controlled based on pressure in the channel between the valve 317a and the check valve 3171a.

In an inactive state, the valve 317a blocks feeding from the first main channel 312a.

In the example shown in Fig 2, retraction of the hydraulic actuator 23 is provided by feeding via the first valve 317a.

The second valve 317b permits, in an activated state, feeding from the first main channel 312a to the second controllable channel 313b and returning from the first controllable channel 313a to the second main channel 312b via the return channel 316 by opening the check valve 3172b. The check valve 3172b is pilot-controlled based on pressure in the channel between the valve 317b and the check valve 3171b.

In the example shown in Fig 2, expansion of the hydraulic actuator 23 is provided by feeding via the first valve 317a.

The check valves 3171a, 3171b (selectable) can prevent the position of the actuator 23 from changing inadvertently.

The check valve 3161 (selectable) can prevent the pressure in the second main channel 312b affecting the controllable channels 313a, 313b.

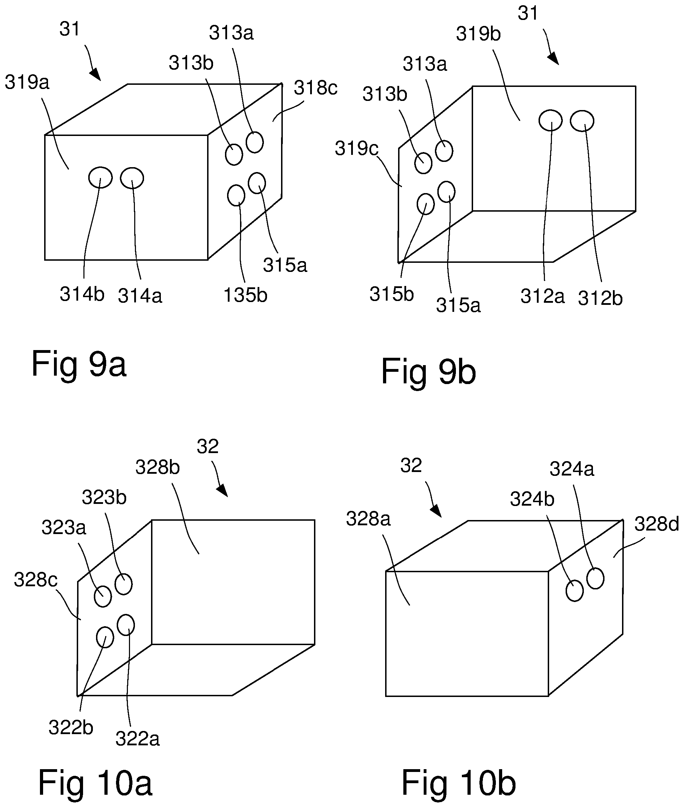

With reference to Figs 9a-9b, the base module 31 can be formed as a body having a first pair of parallel sides 319a, 319b forming an interface to other base modules or to incoming feed channels. Furthermore, the base module can have a third side 319c forming an interface for the function to be controlled, directly or via an override module 32 and/or a pressure control module 33, 33'. The third side 319c can be perpendicular to the first parallel sides 319a, 319b.

A first side 319a can form an interface, either to an incoming channel, in which event a channel inlet can be provided with a coupling device, or to a special inlet module (not shown), or to a second side 319b of an adjacent base unit.

Therefore, the second side 319b can typically form an interface to a first side 319a of the adjacent base unit. Alternatively, the ports 314a, 314b of the second side can be plugged.

A gasket can be arranged between adjacent sides 319a, 319b.

Adjacent base modules 31, 31' can be fitted to each other by e.g. a threaded joint.

The third side 319c forms an interface to the function(s) to be controlled.

The body can be formed by a block of material, e.g. metal or polymer, or by several blocks being joined together.

Inside the body, channels and spaces for valve assemblies and connections thereto can be formed by milling out/drilling from a piece of material and/or by casting two or more parts, which are joined together, possibly with an intermediate gasket.

Ports can be formed as threaded holes in which a nipple for a hose connected can be fitted. Around the holes, a circumferential recess can be provided, in which a seal, such as an O-ring, can be arranged.

Modules can be fitted together using a through-screw, which can engage with threaded holes in the adjacent module, or a nut.

Furthermore, one of the sides can be provided with an interface for controlling a valve arrangement arranged in the base module.

Therefore, in a normal state of feeding, i.e. where the first channel 312a is a feed channel and the second channel 312b is a return channel, the valves 317a, 317b can be selectively activated in order to retract or project the actuator 23.

During a reversed state of feeding, i.e. where the first channel 312a is a return channel and the second channel 312b is a feed channel, the check valve 3161 prevents feeding.

Fig 3 shows a base module 31', which provides the same function as the base module in Fig 2, but there, instead of fixed restrictors, check valves and pilot locks for controlling the return flow via 316, a slide valve 318 is used to permit a return flow to a tank and to ensure that the pilot lock locks.

The slide valve 318 provides the same function as the valve arrangement in Fig 2:
When the slide valve 318 is in its intermediate position, the remaining pilot pressure is drained into the second channel 312b.

If the valve 318 is projected to the left (as illustrated) feeding is provided from the first channel 312a to the first controllable channel 313a and returning from the second controllable channel 313b to the second channel 312b.

In this position, the pilot valve 3171b will open as a result of the channel being pressurized between the slide valve 318 and the pilot valve 3171a.

With the valve 318 in the right position (as illustrated) feeding is provided from the first channel 312a to the second controllable channel 313b and returning from the first controllable channel 313a to the second channel 312b.

In this position, the pilot valve 3171a will open as a result of the channel being pressurized between the slide valve 318 and the pilot valve 3171b.

Fig 4a shows schematically an override module 32, which is engaged with a base module 31 and an actuator 23.

The override module 32 comprises a pair of incoming controlled connections 323a, 323b and a pair of outgoing controllable connections 324a, 324b. Furthermore, the override module 32 has a pair of bypass connections 322a, 322b, and a valve arrangement, by means of which the bypass connections 322a, 322b can be linked to the controlled connections.

During a normal state of feeding, i.e. with the first channel 312a as the feed channel and the second channel 312b as the return channel, in principle, the override module has no effect on the actuator 23.

The check valve 326 prevents a flow from the first main channel 312a, which is the feed channel. The check valve 325b prevents a flow from the second outgoing connection 324b from affecting the second main channel 312b.

The control valve 327 inhibits, in its activated position, a flow from the second main channel 312b.

In its passive position, the control valve 327 permits a flow from the second main channel 312b to the second outgoing connection 324b, at the same time as the check valve 325a opens so that the return from the actuator 23 via the first outgoing connection 324a can be returned to the first main channel 312a. However, in the normal state of feeding, the second main channel 312b is the return channel, and thus the valve 327, in its passive, open position, does not affect the actuator 23.

When the feeding from the tractor vehicle has been switched, so that the second main channel 312b forms the feed channel and the first main channel 312a forms the return channel, the valve 327 can be operated so that the actuator 23 expands whereby the base module is overridden.

It will be appreciated that the arrangement could instead be used to enable the actuator to be retracted.

With reference to Figs 10a-10b, the override module 32 can be formed as a body 321 having a first pair of parallel sides 328a, 328b and a second pair of parallel sides 328c, 328d.

A first side 328c forms an incoming interface, for connecting to an outgoing interface 319c of a base module 31, 31' or to an outgoing interface 338d of a pressure control module 33, 33'.

A second side 328d forms an outgoing interface, for connecting to the actuator or actuators 23 to be controlled.

The second pair of parallel sides 328c, 328d can be perpendicular to the first pair of parallel sides 328a, 328b.

Furthermore, one of the sides can be provided with an interface for controlling a valve arrangement arranged in the override module.

The override module 32 can be fitted to a base module 31, 31' or to a pressure control module 33, 33' using a threaded joint, possibly with an intermediate gasket.

The override module can function as follows:
During a normal state of feeding, i.e. feeding via the first main channel 312a and returning via the second main channel 312b, it is not possible to activate the override module since the check valve 326 inhibits feeding from the first main channel 312a.

During switching of the state of feeding, so that feeding instead happens from the second main channel 312b and returning to the first main channel 312a, the valve 327 will permit feeding to the actuator 23 via the valve 325b. The valve 325a is pilot-controlled by the pressure in the channel between the valve 317 and the check valve 325b.

Thus, the effect of this is that the actuator 23 projects as feeding now happens from the second main channel 312b.

The valve 327 can be used to limit the operability of the actuator 23, e.g. in order to permit a low lifting of an agricultural implement when turning on a headland.

Therefore, the valve 327 is not necessary but can be applied if this limiting function is desired.

The valve 327 can be controlled manually or electronically. During electronic control, this can be based on a position sensor or a feed time.

Therefore, the override module according to Fig 4a provides operability of the actuator 23 when the feeding on the main channels 312a, 312b is switched. When the feeding is switched back, the position will be maintained until the base module valves 317a, 317b (the base module is a position retaining module) are activated.

Fig 4b shows an alternative override module, which has flexibility so that it is possible to select which of the lines 324a, 324b should be overridable when the feeding has switched. For this purpose, the connections are provided from the second bypass channel 322b, via the valve 327 and the check valve 325b to the two lines 324a, 324b.

Both of the connections have a respective blocking device 329a, 329b, which can block one of the connections between the channel 324a, 324b and the check valve 325b. The blocking device 329a, 329b can be formed as a mechanical "plug", which is arranged permanently or can only be removed through direct engagement with the module. By blocking one of the blocking devices 329a, 329b, feeding is provided only to the channel 324a, 324b which is not blocked, wherein the override module can be configured with respect to which of the two channels 324a, 324b it should be possible to override, e.g. in order to select whether it should be possible to override for an expansion or for a contraction of a hydraulic actuator.

Return connections are provided in the same way from both of the lines 324a, 324b to the first bypass channel 322a and blocking devices 329c, 329d for each of these.

For example, by plugging the blocking devices 329a and 329d, overriding is permitted by means of feeding to the second channel 324b and returning from the first channel 324a.

As a result of plugging the blocking devices 329b and 329c instead, overriding is permitted by feeding to the first channel 324a and returning from the second channel 324b.

Such a design enables two different functions to be selectively provided using a physical prochannel.

Fig 4c shows an embodiment where only one bypass channel 322b is used. In this embodiment, a first check valve is arranged to permit feeding from the second bypass channel 322b to the second controllable channel 324b when feeding has switched to feeding via the second channel 312b. At the same time, the pilot-controlled valve 330b opens for returning from the first controllable channel 324a to the second controllable channel 324b.

In this way, more hydraulic fluid can be pushed into the second controllable channel 324b.

One limitation is that the pressure simultaneously increases in the first controllable channel 324a which acts as a return line. Thus the resulting force fully depends on the design of the actuator. For example, if using a slim piston rod the difference in force between the piston sides, and thus the force exerted by the actuator on its load, is less than if the piston rod is thicker.

Alternative embodiments of modules for pressure control will be described below.

Fig 5 shows an embodiment of a pressure control module 33, for pressure controlling an actuator 23. The module 33 comprises a module housing 331, which accommodates a control valve 3311 which is connected to the bypass channel 315a, a pressure sensor 3312, a pressure accumulator 3313 and a check valve 3314.

The pressure control valve 33 has incoming main channels 332a, 332b, from e.g. a base module 31, and outgoing feed channels 333a, 333b, to an actuator 23 or to an override module 32.

Furthermore, the pressure control module 33 has incoming bypass channels 334a, 334b and outgoing bypass channels 335a, 335b.

The pressure control module 33 can also have connections, on any of the other sides, for controlling the valve, for the pressure sensor 3312 and for the pressure accumulator 3313. Alternatively, the pressure sensor can be integrated in the module 33.

During a normal state of feeding, i.e. feeding via the first channel 312a and returning via the second main channel 312b, pressure is accumulated from the first control channel 332a in the accumulator 3313. By operating the control valve 3311 and/or the valve 317b, pressure can be drained from the control channel 322b to the second main channel 312b.

During switching of the state of feeding, so that feeding instead happens from the second main channel 312b and returning to the first main channel 312a, the check valve 3314 will inhibit feeding from the second main channel 312b. Thus it becomes possible to increase the pressure in the second control channel 313b, 333b.

Thus, in the embodiment shown, increasing the pressure in the channel 313a, 333a is only possible during a normal state of feeding.

During a normal state of feeding, the pressure in the channel 313a, 333a can be decreased by operating the valve 317b, so that the pilot valve 3172b opens and permits draining via the valve via the return channel 316 to the second main channel 312b.

The pressure can be controlled by the hydraulic control unit 35 via the control valve 3311 and the valves 317a, 317b based on a signal from the pressure sensor 3312 and a set desired value.

It will be appreciated that a pressure setting/an accumulator can be introduced on an arbitrary side of the actuator, i.e. an accumulator can act in a retracting or a projecting manner on the actuator.

For example, a desired ground pressure can be set using a pressure control module 33.

As described above, during a normal state of feeding, it is the main channel 312a that is pressurized and the main channel 312b that is the return channel.

During such normal operation, the valve 3311 prevents a flow from the first main channel 312a, via the controllable channel 313b to the main channel 312b.

When the source 11 is reversed, the valve 3311 can control the pressure with which the actuator 23 is fed via the bypass channels 315a, 315b.

During activation, the valve 3311 permits a flow from the controllable channel 313b to the main channel 312b.

Fig 6a shows an alternative embodiment of a pressure control module 33', which is arranged in a module housing 331'. The interface for this is the same as for the pressure control module 33, apart from that there is no connection for an accumulator 3313.

The valve 3311 is also identical to the embodiment according to Fig 5.

An electronic pressure control valve 3315 is connected to both bypass channels 334a, 334b. Such pressure control valves are known and work by alternately supplying or draining fluid in order to maintain a predetermined pressure.

A connection to the first bypass channel 334a permits the pressure control valve 3315, during a normal state of feeding, i.e. feeding via the first main channel 312a and returning via the second main channel 312b, to supply pressure to the first control channel 333a when the control unit 35, based on the pressure sensor 3312, determines that the pressure in the channel 333a is too low.

In order to reduce the pressure in the channel 333a, the pressure control valve can drain via the check valve 3316 to the second bypass channel 334b and thus to the second main channel 312b.

In the same way, the valve 3311 can drain pressure from the second control channel 333b to the second bypass channel 334b.

The connection to the second bypass channel 334b is via a check valve 3316, which prevents feeding from the second bypass channel 334b when the main channels are in a reversed state of feeding.

During switching of the state of feeding, so that feeding instead happens from the second main channel 312b and returning to the first main channel 312a, the check valves 3314, 3316 will prevent feeding to the valves 3311 and 3315.

Thus, a change of pressure cannot be provided in the reversed state of feeding.

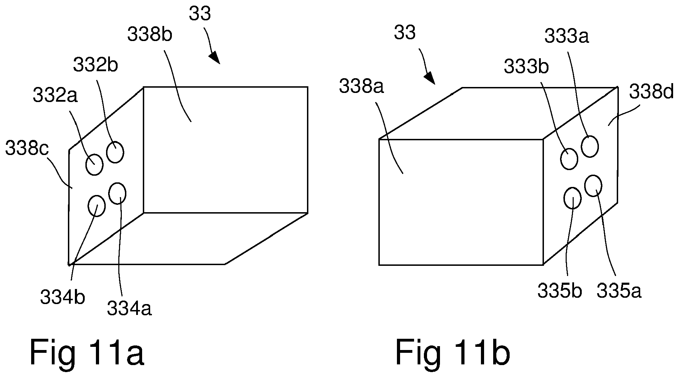

With reference to Figs 11a-11b, the pressure control module 33, 33' can be formed as a body having a first pair of parallel sides 338a, 338b, and a second pair of parallel sides 338c, 338d, of which a first side 338c forms an incoming interface for connecting to an outgoing interface 338c of a base module 31, 31', and of which a second side 328d forms an outgoing interface, for connecting to the actuator or actuators 23 to be controlled, or for connecting to an override module 32.

The first side 338c can have connections for incoming main channels 332a, 332b and for incoming bypass channels 334a, 334b. This side is adapted to form an interface to the third side 319c of a base module.

The second side 338d can have connections for outgoing feed channels 333a, 333b and for outgoing bypass channels 334a, 334b.

The second pair of parallel sides 338c, 338d can be perpendicular to the first pair of parallel sides 338a, 338b.

Furthermore, one of the sides can be provided with an interface for controlling a valve arrangement arranged in the pressure control module.

Fig 6b shows a further alternative embodiment of a pressure control module 33", which is arranged in a module housing 331".

The pressure control module shown in Fig 6b substantially corresponds to the pressure control module shown in Fig 6a, but it is formed so that pressure control on the first controllable channel 333a can be provided irrespective of which of the channels 312a, 312b presently forms the feed channel or the return channel.

The valve 3311 therefore connects both bypass channels 334a, 334b via respective check valves 3314a, 3314b, so that when the valve 3311 is activated, it permits returning to the channel of the channels 334a, 334b which has the lowest pressure (i.e. the channel which presently forms the return channel).

The valve 3315 is, via one of its inputs, connected to both bypass channels 334a, 334b via respective check valves 3316a, 3316b so that these permit returning to the channel of the channels 334a, 334b which has the lowest pressure (i.e. the channel which presently forms the return channel).

Via its second input, the valve 3315 is connected to both channels via respective check valves 3317a, 3317b so that these permit feeding to the valve 3315 from the channel of the channels 334a, 334b which has the highest pressure (i.e. the channel which presently forms the feed channel).

In one of its positions, the valve 33151 permits feeding from the valve 3315 to the first controllable channel 333a, and in its second position, it permits returning from the first controllable channel 333a to the valve 3315.

By using such a pressure control module, it is possible to combine pressure control with overriding on condition that pressure control can be maintained even when lifting, for example, of a part of an implement is provided.

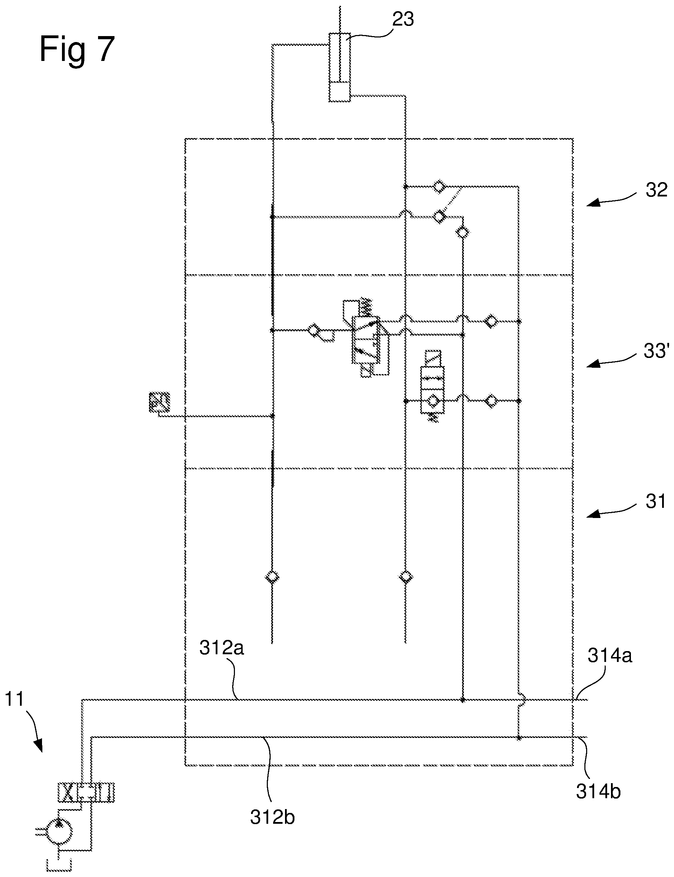

In the following embodiment, with reference to Fig 7, an example is shown of how a combination of the base module 31, the override module 32 and the pressure control module 33' can be used to control a function, here a low lifting function, in an agricultural implement 2. For details with respect to respective modules which form a part of the system, see Figs 3, 4 and 6.

Starting from the normal state of feeding, i.e. feeding via the first main channel 312a and returning via the second main channel 312b, a ground pressure provided by the actuator 23 can be set using the pressure control module 33', which, accordingly, takes feeding from the first bypass channel 315a, 334a for increasing the pressure in the first control channel 331a, 333a and draining to the second bypass channel 315b, 334b for decreasing the pressure in the first control channel 331a, 333a.

Before turning on a headland, the operator switches the state of feeding to a reversed state of feeding, so that feeding instead happens from the second main channel 312b and returning to the first main channel 312a. Here, the second bypass channel 315b, 334b, 322b is pressurized, and as long as the valve 327 is open, the second control channel 324b will be pressurized, whereby the agricultural implement 2 is raised. Draining is carried out via the pilot valve 325a and the check valve 326 to the first bypass channel 315a, 334a, 322a and thus to the first main channel 312a.

When the control unit 35 determines that sufficient raising is provided, for example "low lifting", i.e. raising so that the implement is only just out of the ground, the control unit 35 activates the valve 327 so that this shuts off and stops the feeding from the second bypass channel 315b, 334b, 322b, whereby the turning is carried out.

When the turning has been carried out, the operator switches back to the normal state of feeding and activates the base module valve 317a, wherein the pilot valve 3172a opens, so that the second control channel 324b is drained via the channel 316 to the second main channel 312b.

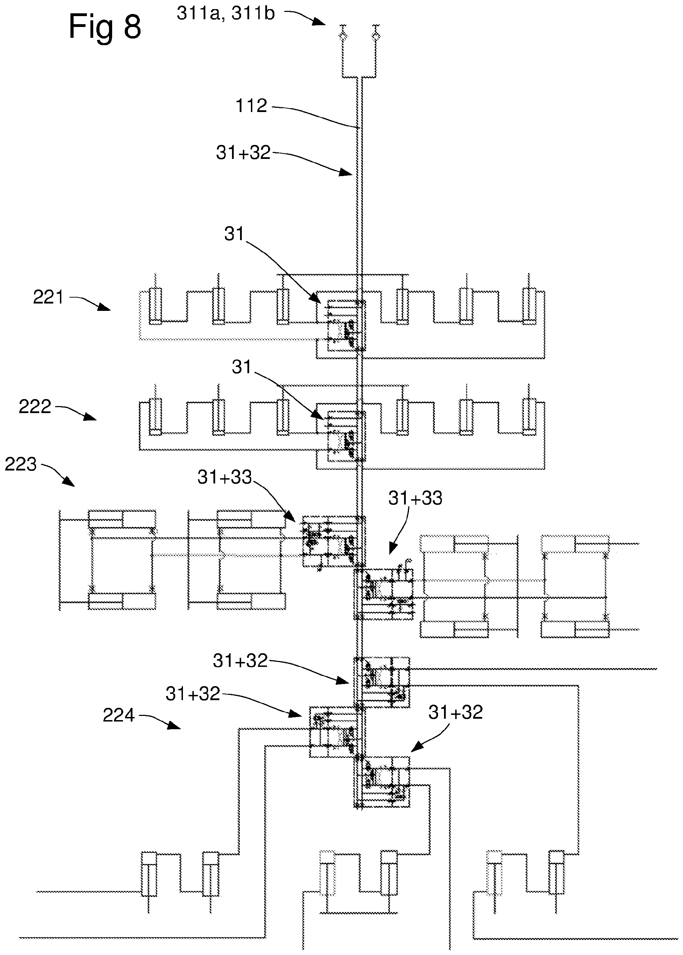

Fig 8 shows an example of how modules according to the descriptions above can be assembled to form a hydraulic system of an agricultural implement. The example shows the hydraulic system without coupling to a tractor vehicle.

The hydraulic system also comprises a main coupling 111 for engagement to the hydraulic output 11 of the tractor vehicle. A main channel 112 emanates from the main coupling and supplies a number of base modules 31 which form a part of the system, where each base module 31 is separately controllable for controlling a function.

In the example shown, the agricultural implement has four different controllable functions 221, 222, 223, 224, comprising a pre-tool function 221, a levelling-out function 222, tool-equipped side sections 223 and a raising and lowering function 224, such as a wheel or roller assembly.

The pre-tool function 221 is shown here as a position-controllable function and its hydraulic actuators are thus controllable via a base module 31 or 31'.

In the same way, the levelling-out function 222 is position-controllable and its hydraulic actuators are thus controllable via a base module 31 or 31'.

The side sections 223 are separately controllable with respect to pressure and/or position, and can thus be controlled using a base module 31 or 31' each (which can control the respective relative position of the side sections in relation to a main frame of the agricultural implement), which can selectively be connected to a pressure control module 33, 33' which, therefore, can control so that the respective side frame section provides a predetermined pressure on the ground.

It will be appreciated that the base module function, instead of providing position-control, can be modified to provide pressure control.

The raising and lowering function 224 can comprise one or more base modules 31, 31' and one respective override module 32. Thus the setting of a certain work depth is enabled via the base module 31, 31' position-control function and, by switching the channels of the hydraulic output 11, an opportunity to bypass the base module 31, 31' is enabled for quick raising of the implement before, for example, a headland. By switching the channels back, after turning, position-control can be resumed.

## Claims

1. Agricultural implement (2) comprising a system comprising a manifold base module (31, 31'), and a first manifold sub-module (32), arranged for controlling at least one hydraulic function of the agricultural implement
wherein the manifold base module comprises:
first and second feed ports (311a, 311b),
a first main channel (312a), which is connected to the first feed port (311a),
a second main channel (312b), which is connected to the second feed port (311b),
a first numerically controllable valve arrangement (317a, 317b, 3171a, 3171b, 3172a, 3172b; 318), which is connected to the two main channels (312a, 312b),
a first control channel (313a), which is controllably connectable to the main channels (312a, 312b) via the valve arrangement (317a, 317b, 3171a, 3171b, 3172a, 3172b; 318),
a second control channel (313b), which is controllably connectable to the main channels (312a, 312b) via the valve arrangement (317a, 317b, 3171a, 3171b, 3172a, 3172b; 318),
a first forwarding port (314a), which is connected to the first main channel (312a),
a second forwarding port (314b), which is connected to the second main channel (312b), and
at least one bypass channel (315a, 315b), which is connected to one of said first and second main channels (312a, 312b), for bypassing the first numerically controllable valve arrangement,
wherein the feed ports (311a, 311b) provide a first coupling interface, which is formed on a first surface of the manifold module, and
wherein control ports connected to the control channels (313a, 313b) provide a second coupling interface, which is separate from the first coupling interface, by being formed on a second surface of the manifold module,
wherein the first manifold sub-module comprises:
first and second throughgoing control channels (323a, 323b; 332a, 332b),
a second numerically controllable valve arrangement (325a, 325b, 326, 327), which is arranged to control a flow between one of the control channels (323a, 323b; 324a, 324b) and the bypass channel (322a, 322b; 334a, 334b), and
at least one bypass channel (322a, 322b; 334a, 334b), for bypassing the second numerically controllable valve arrangement,
wherein ports connected to the control channels (324a, 324b) of the first manifold sub-module and ports connected to the bypass channels (322a, 322b) of the first manifold sub-module form a fourth coupling interface (328c), which, is formed on a first surface of the manifold sub-module, and
wherein the first manifold sub-module is connected to the manifold base module by the second coupling interface being connected to the fourth coupling interface.

2. Agricultural implement according to Claim 1, wherein the first numerically controllable valve arrangement (317a, 317b, 3171a, 3171b, 3172a, 3172b; 318) is designed, in a first working position, to permit a flow from the first main channel (312a) to the first control channel (313a), and to permit a return flow from the second control channel (313b) to the second main channel (312b).

3. Agricultural implement according to either Claim 1 or 2, wherein the first numerically controllable valve arrangement (317a, 317b, 3171a, 3171b, 3172a, 3172b; 318) is designed, in a second working position, to permit a flow from the first main channel (312a) to the second control channel (313b), and to permit a return flow from the first control channel (313a) to the second main channel (312b).

4. Agricultural implement according to any one of the preceding claims, wherein the first numerically controllable valve arrangement (317a, 317b, 3171a, 3171b, 3172a, 3172b; 318) is designed, in a third working position, to prevent a flow from the first main channel (312a) to the control channels (313a, 313b).

5. Agricultural implement according to any one of the preceding claims, wherein the base module comprises:
a first bypass channel (315a), which is connected to the first main channel (312a), and
a second bypass channel (315b), which is connected to the second main channel (312b).

6. Agricultural implement according to any one of the preceding Claims, wherein the manifold sub-module comprises a first bypass channel (322a, 334a) and a second bypass channel (322b, 334b).

7. Agricultural implement according to Claim 6, wherein the second numerically controllable valve arrangement is configured, in a first feeding direction of the bypass channels, to prevent feeding between the bypass channels and the control channels, and, in a second feeding direction of the bypass channels, to permit feeding between the bypass channels and the control channels.

8. Agricultural implement according to Claim 6, wherein the second numerically controllable valve arrangement is configured to permit feeding to one of the control channels irrespective of the feeding direction of the bypass channels.

9. Agricultural implement according to any one of Claims 6-8, wherein the second numerically controllable valve arrangement (325a, 325b, 326, 327) is adjustable between two states,
wherein the second numerically controllable valve arrangement (325a, 325b, 326, 327), in a first state, prevents a flow from the first bypass channel (322a) to the first control channel (324a), prevents a flow from the second control channel (324b) to the second bypass channel (322b) and permits a flow from the second bypass channel (334b) to the second control channel (324b), and
wherein the second numerically controllable valve arrangement (325a, 325b, 326, 327), in a second state, permits a flow from the second bypass channel (322b) to the second control channel (324b) and permits a flow from the first control channel (324a) to the first bypass channel (322a).

10. Agricultural implement according to any one of Claims 6-9,
wherein the second numerically controllable valve arrangement comprises:
a control valve (327), which in a first state permits a flow from the second bypass channel to the second control channel (324b), and which, in a second state, prevents a flow from the second bypass channel (322b) to the second control channel (324b),
a check valve (325b), which only permits a flow from the second bypass channel (322b) to the second control channel (324b),
a pilot valve (325a), which only permits a flow from the first control channel (324a) to the first bypass channel (322a) when pressure is in the forward direction of the check valve (325b).

11. Agricultural implement according to any one of the preceding Claims,
wherein the second numerically controllable valve arrangement can be changed between two states,
wherein the second numerically controllable valve arrangement, in a first state, prevents a flow from one of the control channels to the bypass channel, and
wherein the second numerically controllable valve arrangement, in a second state, permits a flow from said control channel to the bypass channel,
wherein the second numerically controllable valve arrangement comprises a pressure control arrangement, configured to maintain a predetermined pressure in one of the control channels.

12. Agricultural combination comprising a tractor vehicle (1) and an agricultural implement (2) according to any one of the preceding Claims,
wherein the tractor vehicle has a double-acting hydraulic output comprising the first and second hydraulic ports,
wherein, in a first state of feeding, the first hydraulic port forms the feed channel and the second hydraulic port forms the return channel, and, in a second state of feeding, the first hydraulic port forms the return channel and the second hydraulic port forms the feed channel, and
wherein said hydraulic ports are connected to respective feed ports (311a,311b).

## Patentansprüche

1. Landwirtschaftliches Gerät (2), umfassend ein System, das ein Verteilerbasismodul (31, 31') und ein erstes Verteileruntermodul (32) umfasst, das angeordnet ist, um mindestens eine Hydraulikfunktion des landwirtschaftlichen Geräts zu steuern,
wobei das Verteilerbasismodul umfasst:
einen ersten und zweiten Zuführanschluss (311a, 311b),
einen ersten Hauptkanal (312a), der mit dem ersten Zuführanschluss (311a) verbunden ist,
einen zweiten Hauptkanal (312b), der mit dem zweiten Zuführanschluss (311b) verbunden ist,
eine erste numerisch steuerbare Ventilanordnung (317a, 317b, 3171a, 3171b, 3172a, 3172b; 318), die mit den zwei Hauptkanälen (312a, 312b) verbunden ist,
einen ersten Steuerkanal (313a), der mit den Hauptkanälen (312a, 312b) über die Ventilanordnung (317a, 317b, 3171a, 3171b, 3172a, 3172b; 318) steuerbar verbindbar ist,
einen zweiten Steuerkanal (313b), der mit den Hauptkanälen (312a, 312b) über die Ventilanordnung (317a, 317b, 3171a, 3171b, 3172a, 3172b; 318) steuerbar verbindbar ist,
einen ersten Weiterleitungsanschluss (314a), der mit dem ersten Hauptkanal (312a) verbunden ist,
einen zweiten Weiterleitungsanschluss (314b), der mit dem zweiten Hauptkanal (312b) verbunden ist, und
mindestens einen Umgehungskanal (315a, 315b), der mit einem von dem ersten und zweiten Hauptkanal (312a, 312b) verbunden ist, zum Umgehen der ersten numerisch steuerbaren Ventilanordnung,
wobei die Zuführanschlüsse (311a, 311b) eine erste Kopplungsschnittstelle vorsehen, die auf einer ersten Fläche des Verteilermoduls gebildet ist, und wobei Steueranschlüsse, die mit den Steuerkanälen (313a, 313b) verbunden sind, eine zweite Kopplungsschnittstelle vorsehen, die von der ersten Kopplungsschnittstelle getrennt ist, indem sie auf einer zweiten Fläche des Verteilermoduls gebildet ist,
wobei das erste Verteileruntermodul umfasst:
einen ersten und zweiten durchgehenden Steuerkanal (323a, 323b; 332a, 332b),
eine zweite numerisch steuerbare Ventilanordnung (325a, 325b, 326, 327), die angeordnet ist, um einen Strom zwischen einem der Steuerkanäle (323a, 323b; 324a, 324b) und dem Umgehungskanal (322a, 322b; 334a, 334b) zu steuern, und
mindestens einen Umgehungskanal (322a, 322b; 334a, 334b) zum Umgehen der zweiten numerisch steuerbaren Ventilanordnung,
wobei Anschlüsse, die mit den Steuerkanälen (324a, 324b) des ersten Verteileruntermoduls verbunden sind, und Anschlüsse, die mit den Umgehungskanälen (322a, 322b) des ersten Verteileruntermoduls verbunden sind, eine vierte Kopplungsschnittstelle (328c) bilden, welche auf einer ersten Fläche des Verteileruntermoduls gebildet ist, und
wobei das erste Verteileruntermodul mit dem Verteilerbasismodul durch die zweite Kopplungsschnittstelle verbunden ist, das mit der vierten Kopplungsschnittstelle verbunden ist.

2. Landwirtschaftliches Gerät nach Anspruch 1, wobei die erste numerisch steuerbare Ventilanordnung (317a, 317b, 3171a, 3171b, 3172a, 3172b; 318) in einer ersten Arbeitsposition ausgelegt ist, um einen Strom von dem ersten Hauptkanal (312a) zu dem ersten Steuerkanal (313a) zu erlauben und um einen Rückstrom von dem zweiten Steuerkanal (313b) zu dem zweiten Hauptkanal (312b) zu erlauben.

3. Landwirtschaftliches Gerät nach entweder Anspruch 1 oder 2, wobei die erste numerisch steuerbare Ventilanordnung (317a, 317b, 3171a, 3171b, 3172a, 3172b; 318) in einer zweiten Arbeitsposition ausgelegt ist, um einen Strom von dem ersten Hauptkanal (312a) zu dem zweiten Steuerkanal (313b) zu erlauben und um einen Rückstrom von dem ersten Steuerkanal (313a) zu dem zweiten Hauptkanal (312b) zu erlauben.

4. Landwirtschaftliches Gerät nach einem der vorhergehenden Ansprüche, wobei die erste numerisch steuerbare Ventilanordnung (317a, 317b, 3171a, 3171b, 3172a, 3172b; 318) in einer dritten Arbeitsposition ausgelegt ist, um einen Strom von dem ersten Hauptkanal (312a) zu den Steuerkanälen (313a, 313b) zu verhindern.

5. Landwirtschaftliches Gerät nach einem der vorhergehenden Ansprüche, wobei das Basismodul umfasst:
einen ersten Umgehungskanal (315a), der mit dem ersten Hauptkanal (312a) verbunden ist, und
einen zweiten Umgehungskanal (315b), der mit dem zweiten Hauptkanal (312b) verbunden ist.

6. Landwirtschaftliches Gerät nach einem der vorhergehenden Ansprüche, wobei das Verteileruntermodul einen ersten Umgehungskanal (322a, 334a) und einen zweiten Umgehungskanal (322b, 334b) umfasst.

7. Landwirtschaftliches Gerät nach Anspruch 6, wobei die zweite numerisch steuerbare Ventilanordnung eingerichtet ist, um in einer ersten Zuführrichtung der Umgehungskanäle eine Zufuhr zwischen den Umgehungskanälen und den Steuerkanälen zu verhindern und in einer zweiten Zuführrichtung der Umgehungskanäle eine Zufuhr zwischen den Umgehungskanälen und den Steuerkanälen zu erlauben.

8. Landwirtschaftliches Gerät nach Anspruch 6, wobei die zweite numerisch steuerbare Ventilanordnung eingerichtet ist, um eine Zufuhr zu einem der Steuerkanäle unabhängig von der Zuführrichtung der Umgehungskanäle zu erlauben.

9. Landwirtschaftliches Gerät nach einem der Ansprüche 6-8,
wobei die zweite numerisch steuerbare Ventilanordnung (325a, 325b, 326, 327) zwischen zwei Zuständen einstellbar ist,
wobei die zweite numerisch steuerbare Ventilanordnung (325a, 325b, 326, 327) in einem ersten Zustand einen Strom von dem ersten Umgehungskanal (322a) zu dem ersten Steuerkanal (324a) verhindert, einen Strom von dem zweiten Steuerkanal (324b) zu dem zweiten Umgehungskanal (322b) verhindert und einen Strom von dem zweiten Umgehungskanal (334b) zu dem zweiten Steuerkanal (324b) erlaubt, und
wobei die zweite numerisch steuerbare Ventilanordnung (325a, 325b, 326, 327) in einem zweiten Zustand einen Strom von dem zweiten Umgehungskanal (322b) zu dem zweiten Steuerkanal (324b) erlaubt und einen Strom von dem ersten Steuerkanal (324a) zu dem ersten Umgehungskanal (322a) erlaubt.

10. Landwirtschaftliches Gerät nach einem der Ansprüche 6-9, wobei die zweite numerisch steuerbare Ventilanordnung umfasst:
ein Steuerventil (327), das in einem ersten Zustand einen Strom von dem zweiten Umgehungskanal zu dem zweiten Steuerkanal (324b) erlaubt und
das in einem zweiten Zustand einen Strom von dem zweiten Umgehungskanal (322b) zu dem zweiten Steuerkanal (324b) verhindert,
ein Rückschlagventil (325b), das nur einen Strom von dem zweiten Umgehungskanal (322b) zu dem zweiten Steuerkanal (324b) erlaubt,
ein Vorsteuerventil (325a), das nur einen Strom von dem ersten Steuerkanal (324a) zu dem ersten Umgehungskanal (322a) erlaubt, wenn ein Druck in der Vorwärtsrichtung des Rückschlagventils (325b) vorliegt.

11. Landwirtschaftliches Gerät nach einem der vorhergehenden Ansprüche,
wobei die zweite numerisch steuerbare Ventilanordnung zwischen zwei Zuständen verändert werden kann,
wobei die zweite numerisch steuerbare Ventilanordnung in einem ersten Zustand einen Strom von einem der Steuerkanäle zu dem Umgehungskanal verhindert, und
wobei die zweite numerisch steuerbare Ventilanordnung in einem zweiten Zustand einen Strom von dem Steuerkanal zu dem Umgehungskanal erlaubt, wobei die zweite numerisch steuerbare Ventilanordnung eine Drucksteueranordnung umfasst, die eingerichtet ist, um einen vorbestimmten Druck in einem der Steuerkanäle aufrechtzuerhalten.

12. Landwirtschaftliche Kombinationseinrichtung, umfassend ein Zugfahrzeug (1) und ein landwirtschaftliches Gerät (2) nach einem der vorhergehenden Ansprüche,
wobei das Zugfahrzeug eine doppeltwirkende Hydraulikausgabe aufweist, die einen ersten und zweiten Hydraulikanschluss umfasst,
wobei in einem ersten Zustand der erste Hydraulikanschluss den Zuführkanal bildet und der zweite Hydraulikanschluss den Rückführkanal bildet und in einem zweiten Zustand zum Zuführen der erste Hydraulianschluss den Rückführlanal bildet und der zweite Hydraulikanschluss den Zuführkanal bildet, und
wobei die Hydraulikanschlüsse mit jeweiligen Zuführanschlüssen (311a, 311b) verbunden sind.

## Revendications

1. Outil agricole (2) comprenant un système comprenant un module de base de collecteur (31,31') et un premier sous-module de collecteur (32) conçu pour commander au moins une fonction hydraulique de l'outil agricole,
le module de base de collecteur comprenant :
des premier et second ports d'alimentation (311a, 311b),
un premier canal principal (312a) qui est connecté au premier port d'alimentation (311a),
un second canal principal (312b) qui est connecté au second port d'alimentation (311b),
un premier système de vannes contrôlable numériquement (317a, 317b, 3171a, 3171b, 3172a, 3172b ; 318) qui est connecté aux deux canaux principaux (312a,312b),
un premier canal de commande (313a) qui est connectable de manière contrôlable aux canaux principaux (312a, 312b) via le système de vannes (317a, 317b, 3171a, 3171b, 3172a, 3172b ; 318),
un second canal de commande (313b) qui est connectable de manière contrôlable aux canaux principaux (312a, 312b) via le système de vanne (317a, 317b, 3171a, 3171b, 3172a, 3172b ; 318),
un premier port d'envoi (314a) qui est connecté au premier canal principal (312a),
un second port d'envoi (314b) qui est connecté au second canal principal (312b), et
au moins un canal de dérivation (315a, 315b) qui est connecté à un desdits premier et second canaux principaux (312a, 312b) pour contourner le premier système de vannes contrôlable numériquement,
les ports d'alimentation (311a, 311b) établissant une première interface de couplage qui est formée sur une première surface du module de collecteur, et
les ports de commande connectés aux canaux de commande (313a, 313b) établissant une deuxième interface de couplage qui est séparée de la première interface de couplage en étant formés sur une seconde surface du module de collecteur,
le premier sous-module de collecteur comprenant :
des premier et second canaux de contrôle traversants (323a, 323b ; 332a, 332b),
un second système de vannes contrôlable numériquement (325a, 325b, 326, 327) qui est disposé de manière à commander un écoulement entre un des canaux de commande (323a, 323b ; 324a, 324b) et le canal de dérivation (322a, 322b ; 334a, 334b), et
au moins un canal de dérivation (322a, 322b ; 334a, 334b) pour contourner le second système de vannes contrôlable numériquement,
les ports connectés aux canaux de commande (324a, 324b) du premier sous-module de collecteur et les ports connectés aux canaux de dérivation (322a, 322b) du premier sous-module de collecteur formant une quatrième interface de couplage (328c) qui est formée sur une première surface du sous-module de collecteur, et
le premier sous-module de collecteur étant connecté au module de base de collecteur par la deuxième interface de couplage qui est connectée à la quatrième interface de couplage.

2. Outil agricole selon la revendication 1, dans lequel le premier système de vannes contrôlable numériquement (317a, 317b, 3171a, 3171b, 3172a, 3172b ; 318) est conçu pour, dans une première position de travail, permettre un écoulement depuis le premier canal principal (312a) jusqu'au premier canal de commande (313a), et pour permettre un retour d'écoulement depuis le second canal de commande (313b) jusqu'au second canal principal (312b).

3. Outil agricole selon la revendication 1 ou 2, dans lequel le premier système de vannes contrôlable numériquement (317a, 317b, 3171a, 3171b, 3172a, 3172b ; 318) est conçu pour, dans une deuxième position de travail, permettre un écoulement depuis le premier canal principal (312a) jusqu'au second canal de commande (313b), et pour permettre un retour d'écoulement depuis le premier canal de commande (313a) jusqu'au second canal principal (312b).

4. Outil agricole selon l'une quelconque des revendications précédentes, dans lequel le premier système de vannes contrôlable numériquement (317a, 317b, 3171a, 3171b, 3172a, 3172b ; 318) est conçu pour, dans une troisième position de travail, empêcher un écoulement depuis le premier canal principal (312a) jusqu'aux canaux de commande (313a,313b).

5. Outil agricole selon l'une quelconque des revendications précédentes, dans lequel le module de base comprend :
un premier canal de dérivation (315a) qui est connecté au premier canal principal (312a), et
un second canal de dérivation (315b) qui est connecté au second canal principal (312b).

6. Outil agricole selon l'une quelconque des revendications précédentes, dans lequel le sous-module de collecteur comprend un premier canal de dérivation (322a, 334a) et un second canal de dérivation (322b, 334b).

7. Outil agricole selon la revendication 6, dans lequel le second système de vannes contrôlable numériquement est conçu pour, dans un premier sens d'alimentation des canaux de dérivation, empêcher l'alimentation entre les canaux de dérivation et les canaux de commande et, dans un second sens d'alimentation des canaux de dérivation, permettre l'alimentation entre les canaux de dérivation et les canaux de commande.

8. Outil agricole selon la revendication 6, dans lequel le second système de vannes contrôlable numériquement est conçu pour permettre l'alimentation d'un des canaux de commande quel que soit le sens d'alimentation des canaux de dérivation.

9. Outil agricole selon l'une quelconque des revendications 6 à 8, dans lequel le second système de vannes contrôlable numériquement (325a, 325b, 326, 327) est réglable entre deux états,
le second système de vannes contrôlable numériquement (325a, 325b, 326, 327) empêchant, dans un premier état, un écoulement depuis le premier canal de dérivation (322a) jusqu'au premier canal de commande (324a), empêchant un écoulement depuis le second canal de commande (324b) jusqu'au second canal de dérivation (322b) et permettant un écoulement depuis le second canal de dérivation (334b) jusqu'au second canal de commande (324b), et
le second système de vannes contrôlable numériquement (325a, 325b, 326, 327) permettant, dans un second état, un écoulement depuis le second canal de dérivation (322b) jusqu'au second canal de commande (324b), et permettant un écoulement depuis le premier canal de commande (324a) jusqu'au premier canal de dérivation (322a).

10. Outil agricole selon l'une quelconque des revendications 6 à 9, dans lequel le second système de vannes contrôlable numériquement comprend :
une vanne de commande (327) qui, dans un premier état, permet un écoulement depuis le second canal de dérivation jusqu'au second canal de commande (324b) et qui, dans un second état, empêche un écoulement depuis le second canal de dérivation (322b) jusqu'au second canal de commande (324b),
une vanne de contrôle (325b) qui permet seulement un écoulement depuis le second canal de dérivation (322b) jusqu'au second canal de commande (324b),
une vanne pilote (325a) qui permet seulement un écoulement depuis le premier canal de commande (324a) jusqu'au premier canal de dérivation (322a) lorsqu'il y a de la pression dans le sens avant de la vanne de contrôle (325b).

11. Outil agricole selon l'une quelconque des revendications précédentes, dans lequel
le second système de vannes contrôlable numériquement peut être permuté entre deux états,
le second système de vannes contrôlable numériquement empêche, dans un premier état un écoulement depuis un des canaux de commande jusqu'au canal de dérivation, et
le second système de vannes contrôlable numériquement permet, dans un second état, un écoulement depuis ledit canal de commande jusqu'au canal de dérivation,
le second système de vannes contrôlable numériquement comprend un système de commande de pression conçu pour maintenir une pression prédéterminée dans un des canaux de commande.

12. Combinaison agricole comprenant un véhicule tracteur (1) et un outil agricole selon l'une quelconque des revendications précédentes, dans laquelle
le véhicule tracteur a une sortie hydraulique à double action comprenant les premier et second ports hydrauliques,
dans un premier état d'alimentation, le premier port hydraulique forme le canal d'alimentation et le second port hydraulique forme le canal de retour et, dans un second état d'alimentation, le premier port hydraulique forme le canal de retour et le second port hydraulique forme le canal d'alimentation, et
lesdits ports hydrauliques étant connectés à des ports d'alimentation respectifs (311a, 311b).
